Europäisches Patentamt

European Patent Office

Office européen des brevets

(19)

(11) **EP 0 694 633 B1**

(12) **EUROPÄISCHE PATENTSCHRIFT**

(45) Veröffentlichungstag und Bekanntmachung des Hinweises auf die Patenterteilung:
 **06.05.1999 Patentblatt 1999/18**

(51) Int Cl.⁶: **D01F 6/62**, D01F 1/10, C08J 5/18, C08K 3/04 // C08L67:02

(21) Anmeldenummer: **95110886.9**

(22) Anmeldetag: **12.07.1995**

(54) **Fasern, Filme oder Hohlkörper aus Zusammensetzungen enthaltend Polyester und Fullerene, Verfahren zur Herstellung der Zusammensetzungen, sowie deren Verwendung**

Fibres, films or hollow objects made of compositions containing polyester and fullerene, process for the preparation of the compositions and their use

Fibres, feuilles ou objets creux à partir de compositions contenant du polyester et du fullérène, procédé pour la préparation des compositions et leur utilisation

(84) Benannte Vertragsstaaten:
 **DE FR GB**

(30) Priorität: **29.07.1994 DE 4426926**

(43) Veröffentlichungstag der Anmeldung:
 **31.01.1996 Patentblatt 1996/05**

(73) Patentinhaber: **HOECHST AKTIENGESELLSCHAFT 65929 Frankfurt am Main (DE)**

(72) Erfinder:
 • **ter Meer, Hans-Ulrich, Dr. D-60431 Frankfurt (DE)**
 • **Dominguez de Walter, Ligia, Dr. D-65931 Frankfurt (DE)**

 • **Bruckner, Werner, Dr. D-65830 Kriftel (DE)**
 • **Idzko, Jürgen, Dr. D-86399 Bobingen (DE)**
 • **Klein, Peter, Dr. D-65205 Wiesbaden (DE)**

(74) Vertreter: **Schweitzer, Klaus, Dr. et al Patentanwaltskanzlei Zounek, Industriepark Kalle-Albert, Rheingaustrasse 190-196 65203 Wiesbaden (DE)**

(56) Entgegenhaltungen:
 EP-A- 0 544 513      WO-A-93/14251
 WO-A-94/11423       WO-A-95/03359
 DE-A- 4 207 246      US-A- 5 296 536

**Beschreibung**

Die vorliegende Erfindung betrifft Fasern, Filme oder Hohlkörper aus Zusammensetzungen enthaltend Polyester und Fullerene, Verfahren zur Herstellung derartiger Zusammensetzungen, sowie die Verwendung dieser Fasern, Filme oder Hohlkörper als Nähfäden oder als Verpackungsmaterialien.

In neuerer Zeit wurden Fullerene als weitere Modifikation des Kohlenstoffs bekannt und beschrieben. In der jüngeren Vergangenheit sind zahlreiche Fachartikel erschienen, worin mögliche Anwendungen vorgeschlagen und diskutiert wurden, beispielsweise in Hoechst High Chem Magazin 14, S. 49-54 (1993) oder in Accounts of Chemical Research, 26 (3), 98-175 (1992).

Es ist auch bereits vorgeschlagen worden, Fullerene mit Polymeren zu kombinieren. So beschreibt z.B. die DE-A-4,207,246 abriebarme thermoplastische Formmassen enthaltend ein thermoplastisches Polymeres und ein Fulleren. Es werden unterschiedliche Polymere aufgezählt, unter anderem auch Polyester, beispielsweise Polyethylenterephthalat oder Polybutylenterephthalat. Beschrieben werden Anwendungen dieser Formmassen für den Spritzguß oder für die Extrusion. Ein Hinweis auf die Herstellung praktisch ein- oder zweidimensionaler Gebilde, wie Fasern oder Filme, wird in dieser Publikation nicht gegeben.

Aus der EP-A-544,513 sind Polymerzusammensetzungen bekannt, die einen derartigen Gehalt an Fullerenen aufweisen, daß die viscoelastischen Eigenschaften des Polymeren modifiziert werden. Die Beschreibung enthält eine umfangreiche Liste von möglichen Polymeren, unter anderem auch Polyester. Neben Polyethylenterephthalat wird auch Polybutylenterephthalat erwähnt. Details zur Verarbeitung der Zusammensetzungen sind dieser Publikation nicht zu entnehmen; so wird insbesondere kein Hinweis auf die Herstellung von Fasern oder Filmen in dieser Publikation gegeben.

Ferner ist bereits bekannt, Fullerene in Monofilamenten also in relativ grobtitrigen Fasern oder Borsten einzusetzen. In der WO-A-93-14,251 werden Monofilamente aus Kunststoffen beschrieben, welche ein Gleitmittel enthalten, das darüber hinaus die Benetzbarkeit der Faser modifiziert. Die Monofilamente weisen Durchmesser von 30 bis 400 µm auf entsprechend einem Fadengewicht (bei einer angenommenen Dichte des Polymeren von 1,38 g/ml) von 10 bis 1700 dtex. In der Beschreibung findet sich ein Hinweis auf den Einsatz von Polyestern.

Nacharbeitungen haben gezeigt, daß vorbekannte Zusammensetzungen enthaltend Polyester und Fullerene sich nicht zu geformten Gebilden mit mindestens einer Dimension geringen Ausmaßes verarbeiten lassen. Während die Herstellung grobtitriger Fasern mit konventionell hergestellten Mischungen aus Polyestern und Fullerenen noch durchführbar erscheint, treten beim Übergang zu feineren Faserdurchmessern bzw. bei der Herstellung von Filmen Probleme bei der Verformung auf.

Es wurde nun überraschend gefunden, daß durch eine spezielle Einarbeitung von Fullerenen in Polyester Zusammensetzungen erhalten werden, die ohne weiteres zu feintitrigen Fasern, sowie zu Filmen und Hohlkörpern verarbeitet werden können und in denen die Fullerene so fein verteilt sind, daß sie ihre Wirksamkeit voll entfalten können. Diese Zusammensetzungen sind erhältlich durch Polykondensation von einem oder mehreren polyesterbildenden Monomeren; das Fulleren wird mindestens einer Verbindung zugesetzt, die für die Herstellung des Polyesters eingesetzt wird.

Die vorliegende Erfindung betrifft Fasern mit einem Einzelfasertiter von weniger als 10 dtex, Filme und Hohlkörper enthaltend Polyester und Fullerene.

Die erfindungsgemäßen Fasern, Filme und Hohlkörper können aus beliebigen Polyestern bestehen.

Dabei kann es sich um Polyester handeln, die im wesentlichen vollständig aus aromatischen Monomeren aufgebaut sind, also beispielsweise zu mehr als 90 Mol%, bezogen auf das Polymere, an wiederkehrenden aromatischen Struktureinheiten bestehen. Bei diesen Polyestern handelt es sich üblicherweise um Typen, die eine flüssigkristalline Schmelze ausbilden. Bevorzugte Beispiele für Verbindungen dieses Typs sind Poly-(para-hydroxybenzoat) oder insbesondere Copolyester abgeleitet von p-Hydroxybenzoesäure und 2,6-Hydroxynaphthoesäure oder deren polyesterbildenden Derivaten.

Vorzugsweise handelt es sich bei den Polyestern um Polymere die aus aromatischen und aliphatischen Monomereinheiten aufgebaut sind, derartige Polyester leiten sich beispielsweise von aromatischen Dicarbonsäuren oder deren polyesterbildenden Derivaten, wie Dicarbonsäurediestern, und aliphatischen Diolen ab.

Bevorzugte Polyester dieses Typs enthalten die wiederkehrende Struktureinheit der Formel I

$$[-OC-R^1-CO-O-R^2-O-] \tag{I},$$

worin $R^1$ einen zweiwertigen ein- oder mehrkernigen aromatischen Rest darstellt und $R^2$ einen zweiwertigen aliphatischen oder cycloaliphatischen Rest bedeutet, wobei die Reste $R^1$ und/oder $R^2$ in einem Molekül im Rahmen der gegebenen Definition unterschiedliche Bedeutungen annehmen können.

Bedeuten irgendwelche Reste zweiwertige aromatische Reste, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie -O-, -S-, -CO-, -SO$_2$- oder -C$_n$H$_{2n}$-linear miteinander verbunden sein, wobei n eine ganze Zahl von 1 bis 10 bedeutet.

Bei den zweiwertigen aromatischen Resten können die Valenzbindungen sich in para- oder in vergleichbarer koaxialer oder paralleler Position oder in meta- oder in vergleichbarer gewinkelter Position zueinander befinden.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Die Valenzbindungen, die sich in meta- oder in vergleichbarer gewinkelter Position zueinander befinden, sind gewinkelt angeordnet.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Die aliphatischen oder cycloaliphatischen Anteile der erfindungsgemäß einzusetzenden Polyester leiten sich in der Regel von zweiwertigen aliphatischen Alkoholen ab.

Üblicherweise stellt R$^2$ einen Alkylenrest dar; darunter ist verzweigtes und insbesondere geradkettiges Alkylen zu verstehen, beispielsweise Alkylen mit zwei bis vier Kohlenstoffatomen, insbesondere Ethylen oder Butylen. Unter Alkylen kann im Sinne der vorliegenden Beschreibung auch ein von einem Polyalkylenglykol abgeleiteter Rest verstanden werden, beispielsweise ein von Diethylenglykol abgeleiteter Rest.

Unter Cycloalkylenresten sind beispielsweise Reste mit fünf bis acht Ringkohlenstoffatomen im zu verstehen, insbesondere Cyclohexylen; dazu zählen im Sinne dieser Beschreibung auch aliphatisch-cycloaliphatische Reste, wie z.B. der Rest des Cyclohexandimethanols.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt werden Polyester auf der Basis von unsubstituierten Resten eingesetzt. überarbeiten

Besonders bevorzugt werden Polyester enthaltend die wiederkehrende Struktureinheit der Formel I eingesetzt, worin R$^1$ 1,4-Phenylen, 1,3-Phenylen, 2,6-Naphthylen, 4,4'-Biphenylen oder eine Kombination derartiger Reste bedeutet, insbesondere eine Kombination von 1,4- und 1,3-Phenylen, von 1,4-Phenylen und 4,4'-Biphenylen, von 1,4-Phenylen und 2,6-Naphthylen oder von 2,6-Naphthylen und Biphenyl-4,4'-en bedeutet und worin R$^2$ Ethylen, Butylen oder einen zweiwertigen Rest des Cyclohexandimethanols bedeutet.

Zusammensetzungen enthaltend Polyester mit der wiederkehrenden Struktureinheit der Formel I, worin R$^1$ 2,6-Naphthylen bedeutet oder eine Kombination von 2,6-Naphthylen mit weiteren zweiwertigen ein- oder zweikernigen aromatischen Resten darstellt, beispielsweise eine Kombination von 2,6-Naphthylen und 4,4'-Biphenylen, von 2,6-Naphthylen und 1,3-Phenylen oder von 2,6-Naphthylen und 1,4-Phenylen, und Fullerene sind neu und ebenfalls ein Gegenstand der vorliegenden Erfindung.

Beispiele für bevorzugte Kombinationen von Dicarbonsäuren (oder Dicarbonsäurediestern) mit zweiwertigen Alkoholen sind Terephthalsäure mit Ethylenglykol; Terephthalsäure mit Propylenglykol; Terephthalsäure mit Butylenglykol; Terephthalsäure mit 1,4-Cyclohexandiol; Terephthalsäure mit 1,4-Cyclohexandimethanol; Terephthalsäure/Iso-

phthalsäure mit Ethylenglykol; Terephthalsäure/Isophthalsäure mit Propylenglykol; Terephthalsäure/Isophthalsäure mit Butylenglykol; Terephthalsäure/Isophthalsäuremit 1,4-Cyclohexandiol; Terephthalsäure/Isophthalsäure mit 1,4-Cyclohexandimethanol; 2,6-Naphthalindicarbonsäure mit Ethylenglykol; 2,6-Naphthalindicarbonsäure mit Propylenglykol; 2,6-Naphthalindicarbonsäure mit Butylenglykol; 2,6-Naphthalindicarbonsäure mit 1,4-Cyclohexandiol; 2,6-Naphthalindicarbonsäure mit 1,4-Cyclohexandimethanol; 4,4'-Biphenyldicarbonsäure mit Ethylenglykol; 4,4'-Biphenyldicarbonsäure mit Propylenglykol; 4,4'-Biphenyldicarbonsäure mit Butylenglykol; 4,4'-Biphenyldicarbonsäure mit 1,4-Cyclohexandiol; 4,4'-Biphenyldicarbonsäure mit 1,4-Cyclohexandimethanol; 2,6-Naphthalindicarbonsäure/4,4'-Biphenyldicarbonsäure mit Ethylenglykol; 2,6-Naphthalindicarbonsäure/4,4'-Biphenyldicarbonsäure mit Propylenglykol; 2,6-Naphthalindicarbonsäure/4,4'-Biphenyldicarbonsäure mit Butylenglykol; 2,6-Naphthalindicarbonsäure/4,4'-Biphenyldicarbonsäure mit 1,4-Cyclohexandiol; 2,6-Naphthalindicarbonsäure/4,4'-Biphenyldicarbonsäure mit 1,4-Cyclohexandimethanol.

Die erfindungsgemäß einzusetzenden Polyester sind an sich bekannt.

In den erfindungsgemäßen Fasern, Filmen oder Hohlkörpern können beliebige Fullerene zum Einsatz kommen. Dabei handelt es sich um große aus Kohlenstoff bestehende Moleküle mit in sich geschlossener polyedrischer Struktur. Bei Fullerenen handelt es sich üblicherweise um käfigförmige Kohlenstoffallotrope der allgemeinen Formel $C_{20+2m}$, worin m 0 oder eine natürliche Zahl darstellt. Vorzugsweise enthalten diese zwölf Fünfringe sowie beliebige viele, mindestens aber zwei Sechsringe aus Kohlenstoffatomen und gegebenenfalls andere Polygone aus Kohlenstoffatomen.

Unter dem Begriff Fullerene sind auch funktionalisierte Fullerene zu verstehen, wie sie z.B. in Nature 363, S. 685-694 (1993) beschrieben sind.

Bevorzugte Fullerene bestehen aus $C_{60}$ bis $C_{70}$ Fraktionen.

Die Herstellung und Isolierung von Fullerenen ist an sich bekannt und beispielsweise in Phys. Bl. 48 (Nr. 7/8), S. 553-556 (1992) beschrieben.

Der Begriff "Fasern" ist im Rahmen dieser Erfindung in seiner breitesten Bedeutung zu verstehen, sofern deren Fadengewicht unterhalb von 10 dtex liegt; dazu zählen also zum Beispiel Filamente oder Stapelfasern.

Der Begriff "Filme" ist im Rahmen dieser Erfindung ebenfalls in seiner breitesten Bedeutung zu verstehen; dazu zählen also zum Beispiel Ausführungsformen unterschiedlicher Stärke, wie Folien oder Membranen.

Der Begriff "Hohlkörper" ist im Rahmen dieser Erfindung ebenfalls in seiner breitesten Bedeutung zu verstehen; dazu zählen zum Beispiel Flaschen.

Die erfindungsgemäßen Fasern besitzen vorzugsweise Fadengewichte von 0,1 bis 10 dtex.

Die erfindungsgemäßen Filme besitzen vorzugsweise Dicken von 2 bis 100 µm. Die gleichmäßige Verteilung der Fullerene in den erfindungsgemäßen Filmen bewirkt eine sehr gute Transparenz; ferner zeichnen sich derartige Filme durch eine glatte Oberfläche aus.

Zur Herstellung der erfindungsgemäß einzusetzenden Zusammensetzungen enthaltend Polyester und Fullerene legt man das Fulleren in mindestens einer zur Herstellung des Polyesters eingesetzten Verbindung, wie Dimethylterephthalat, vor und führt anschließend, gegebenenfalls nach Filtration zur Abtrennung von gröberen Teilchen, die Polykondensation durch. Versuche haben gezeigt, daß auf diese Art und Weise eine sehr gleichmäßige Verteilung des Fullerens im Polyester ermöglicht wird und daß sich die erhaltenen Zusammensetzungen zur Herstellung von Fasern, Filmen oder Hohlkörpern mit den oben angegebenen feinen Dimensionen und/oder glatten Oberflächen eignen.

Die Erfindung betrifft ein Verfahren zur Herstellung von Zusammensetzungen enthaltend Polyester und Fullerene durch Polykondensation von einem oder mehreren polyesterbildendenen Monomeren in an sich bekannter Weise, dadurch gekennzeichnet, daß das Fullerenen mindestens einer der für die Herstellung des Polyesters eingesetzten Verbindung zugesetzt wird.

Die Polykondensation der erfindungsgemäß einzusetzenden aromatischen Polyester wird im allgemeinen als Schmelzepolykondensation durchgeführt.

Bei der Polykondensation wird in an sich bekannter Weise von polykondensierbaren Verbindungen ausgegangen, wie von der entsprechenden Dicarbonsäure oder von einer entsprechenden Vorstufe, wie einem Diester einer Dicarbonsäure, und dem entsprechenden zweiwertigen Alkohol, welche unter Zusatz eines Katalysators zum Polyester kondensiert werden. Im Anschluß an die eigentliche Polykondensation kann sich zwecks weiterer Erhöhung des Molekulargewichts noch eine Festphasenkondensation anschließen.

Als Polykondensationskatalysatoren können die dafür an sich bekannten Typen in den bekannten Mengen eingesetzt werden. Beispiele für Polykondensationskatalysatoren sind Oxide, Carboxylate, wie Acetate, Alkoholate und Komplexverbindungen, wie Acetylacetonate, von Antimon, Cobalt, Germanium, Titan oder Zink. Diese Katalysatoren werden üblicherweise in Mengen von 3 bis 1000 ppm Metall, bezogen auf die Dicarbonsäure, eingesetzt.

In einer bevorzugten Variante des erfindungsgemäßen Verfahrens wird vom Diester der entsprechenden Dicarbonsäure ausgegangen, vorzugsweise vom Dimethylester, und in Gegenwart eines zweiwertigen Alkohols eine Umesterung vorgenommen und sodann die Polykondensation unter Vakuum durchgeführt. Im Anschluß an die eigentliche Polykondensation kann sich auch hier zwecks weiterer Erhöhung des Molekulargewichts noch eine Festphasenkondensation anschließen. Diese Variante ist besonders bevorzugt, da das Fulleren sich im Dicarbonsäurediester besonders gut löst.

Die Umesterung kann in Gegenwart von Umesterungskatalysatoren durchgeführt werden. Dafür können die an sich bekannten Typen in den bekannten Mengen eingesetzt werden. Beispiele für Umesterungskatalysatoren sind Oxide, Carboxylate, wie Acetate, Alkoholate und Komplexverbindungen, wie Acetylacetonate, von Mangan, Cobalt, Zink, Calcium oder Magnesium. Diese Katalysatoren werden üblicherweise in Mengen von 5 bis 500 ppm Metall, bezogen auf den Dicarbonsäurediester, eingesetzt.

Selbstverständlich lassen sich anstelle einzelner Dicarbonsäuren bzw. deren Estern auch Mischungen verschiedener Dicarbonsäuren bzw. deren Estern einsetzen; dies gilt sinngemäß auch für die zweiwertigen Alkohole. Ferner können auch Oligomere als Verbindungen für die Polykondensation eingesetzt werden; beispielsweise Gemische von Bis-(hydroxyethylterephthalat) und höheren Oligomeren.

Das Fulleren wird vorzugsweise zusammen mit der Monomerkomponente der aromatischen Dicarbonsäure bzw. des Diesters der aromatischen Dicarbonsäure vorgelegt.

Üblicherweise werden Mengen von weniger als 5 Gew. % Fulleren, bezogen auf den Polyester in der Zusammensetzung, eingesetzt. Vorzugsweise beträgt die Menge an Fulleren 0,001 bis 1 Gew. %.

Die Mischung aus Monomer und Fulleren wird vor der Umesterung bzw. der Polykondensation zweckmäßigerweise durch geeignete Trennoperationen von gröberen Bestandteilen befreit, beispielsweise durch Filtration der Mischung.

Zur Herstellung der bevorzugten Zusammensetzungen enthaltend Polyester mit der oben definierten wiederkehrenden Struktureinheit der Formel I wird zweckmäßigerweise ein Diester der Formel II oder eine Mischung derartiger Diester zusammen mit einem Fulleren oder einem Gemisch von Fullerenen vorgelegt und mit einem zweiwertigen Alkohol der Formel III oder einem Gemisch derartiger Alkohole umgeestert und die Reaktionsmischung anschließend polykondensiert

$$R^3OOC\text{-}R^1\text{-}COOR^3 \qquad (II),$$

$$HO\text{-}R^2\text{-}OH \qquad (III);$$

dabei besitzen $R^1$ und $R^2$ die weiter oben definierte Bedeutung und $R^3$ ist ein organischer Rest, vorzugsweise Alkyl, insbesondere Methyl.

Zur Herstellung der bevorzugten Zusammensetzungen enthaltend Polyester mit der oben definierten wiederkehrenden Struktureinheit der Formel I kann auch eine Dicarbonsäure der Formel IV oder eine Mischung derartiger Dicarbonsäuren zusammen mit einem Fulleren oder einem Gemisch von Fullerenen vorgelegt und mit einem zweiwertigen Alkohol der Formel III oder einem Gemisch derartiger Alkohole in Gegenwart von Polykondensationskatalysatoren polykondensiert werden

$$HOOC\text{-}R^1\text{-}COOH \qquad (IV),$$

$$HO\text{-}R^2\text{-}OH \qquad (III);$$

dabei besitzen $R^1$ und $R^2$ die weiter oben definierte Bedeutung.

Beispiele für geeignete aromatische Dicarbonsäuren, von denen sich die Dicarbonsäurediester, insbesondere die Dimethylester der Formel II ableiten, sind Isophthalsäure, Naphthalin-1,4-dicarbonsäure, Naphthalin-1,5-dicarbonsäure, Naphthalin-2,6-dicarbonsäure, Biphenyl-4,4'-dicarbonsäure, 2-Methylterephthalsäure und insbesondere Terephthalsäure oder deren Mischungen.

Als zweiwertigen Alkohol der Formel III setzt man vorzugsweise Ethylenglykol, Propylenglykol, Butylenglykol, Hexandiol, Cyclohexandiol, Cyclohexandimethanol oder Diethylenglykol oder deren Mischungen ein.

Bei einer bevorzugten Form der Durchführung der Polykondensation werden die aromatischen monomeren Dicarbonsäurediester zusammen mit dem Fulleren bzw. der Fullerenfraktion gemischt. Die so erhaltene Mischung wird dann mit der mindestens einen monomeren Verbindung in Form eines zweiwertigen Alkohols gemischt und ein Umesterungskatalysator wird zugegeben. Dieses Gemisch wird erhitzt, beispielsweise auf 170 - 230°C um die Umesterung einzuleiten. Als Umesterungskatalysator können beispielsweise die oben erwähnten Verbindungen eingesetzt werden.

Nach Beendigung der Umesterung wird gegebenenfalls filtriert, gegebenenfalls eine Stabilisierung der Umesterungskatalysatoren mittels Phosphoniumverbindungen vorgenommen sowie ein Polykondensationskatalysator zugefügt und die Polykondensation wird durchgeführt, üblicherweise unter vermindertem Druck. Die Fullerene bleiben trotz der Filtration in der Polykondensationsmischung enthalten und sind an ihrer Färbung zu erkennen.

Die Polykondensationstemperaturen liegen üblicherweise zwischen 260 °C und 300 °C, bevorzugt zwischen 270 °C und 290 °C.

Die Summe der Konzentrationen der monomeren Verbindungen in der Polymerisationsgemischlösung kann unter Beachtung des gewünschten Polymerisationsgrades, der gewünschten Viskosität des Polymerisationsgemisches, der Art der verwendeten monomeren Verbindungen und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Im Verlauf der Polykondensation wächst das Molekulargewicht des Polymers und damit auch die Viskosität des Reaktionsansatzes an.

Eine ausreichende Molekül-Kettenlänge ist beispielsweise erreicht, wenn die Viskosität der bei der Polykondensation erhaltenen Polymerlösung einer spezifischen Viskosität des Polymers von mehr als 350, vorzugsweise 700 bis 1200, entspricht.

Unter spezifischer Viskosität wird der Ausdruck

$$\eta_{sp} = (\eta_{rel} - 1) * 1000 \qquad \text{verstanden,}$$

wobei $\eta_{rel}$ die relative Viskosität bedeutet, gemessen bei 25 °C an einer Lösung von 1 g des Polymeren in 100 ml Dichloressigsäure.

Die bei Durchführung des erfindungsgemäßen Verfahrens erhaltene Polyesterzusammensetzung kann ohne weitere Behandlung gegebenenfalls nach ausreichender Trocknung einem Spinn-, Filmbildungs- oder Hohlkörperformverfahren zugeführt werden.

Die erhaltenen geformten Gebilde weisen eine besonders gleichmäßige Verteilung des Fullerens aus und weisen auch die überlegenen mechanischen Eigenschaften auf, die die entsprechenden unmodifizierten geformten Gebilde auszeichnen.

Insbesondere zeichnen sich die erhaltenen Fasern und Filme durch eine UV-Beständigkeit bei praktisch unveränderten sonstigen Eigenschaften aus. Beim Einsatz von funktionalisierten, d.h. chemisch modifizierten Fullerenen können sie auch medizinische oder sonstige Wirkungen entfalten.

Die Herstellung der erfindungsgemäßen Polyesterfasern, Polyesterfilme oder Hohlkörper aus Polyestern kann nach an sich bekannten Schmelzformverfahren erfolgen.

Die erfindungsgemäßen Filme, Fasern oder Hohlkörper zeichnen sich durch ausgezeichnete mechanische Eigenschaften, wie hohe Reißfestigkeiten und Anfangsmoduli und niedrige Reißdehnungen, sowie durch die oben erwähnten günstigen Anwendungs- und Weiterverarbeitungseigenschaften aus.

Die Querschnittsform der Einzelfilamente der erfindungsgemäßen Fasern kann beliebig sein, beispielsweise dreieckig, tri- oder multilobal oder insbesondere elliptisch oder rund.

Die erfindungsgemäßen Fasern, Filme oder Hohlkörper, welche hervorragende mechanische und thermische Eigenschaften besitzen, können auf die verschiedenste Weise industriell eingesetzt werden, beispielsweise als Segel oder als Folienfenster für Sportsegel oder als Nähfäden, insbesondere als Nähfäden für chirurgische Zwecke, sowie als Verpackungsmaterialien. Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Beispiel 1 Herstellung einer Zusammensetzung enthaltend Polyester und Fullerene

In einem mit Metallrührer und Kolonne versehenen 2-Literkolben wurden 1000 g Dimethylterephthalat, 600 ml Ethylenglykol, 330 pm Manganacetat und 1g Fulleren ($C_{60}$-Fraktion) unter Stickstoff im Ölbad auf 175 °C erhitzt bis das Reaktionsgemisch aufgeschmolzen war. Nach Einschalten des Metallrührers setzte die Methanolabspaltung ein. Anschließend wurde die Ölbadtemperatur mit einer Aufheizgeschwindigkeit von 25 °C/STd. auf 235 °C gesteigert. Die Temperatur am Kolonnenkopf überstieg dabei 70 °C nicht. Gegen Beendigung der Umesterung wurde die Ölbadtemperatur auf 250 °C gesteigert und ein Glykolabtrieb durchgeführt.

Nach Durchführung der Umesterung wurde die Temperatur auf 225 °C abgesenkt und 1,64 ppm Phosphorige Säure als Stabilisator und 5,27 ppm Antimontrioxid als Polykondensationskatalysator zudosiert. Anschließend wurde das Gemisch 10 Minuten gerührt und abkühlen gelassen.

Das Umesterungsprodukt wurde über ein 5 µm Filter filtriert und bei 225 °C aufgeschmolzen. Sobald sich ein Schmelzfilm gebildet hatte wurde der Rührer angestellt und die Polykondensation in an sich üblicher Weise unter Vakuum durchgeführt. Im Verlaufe der Polykondensation wurde die Temperatur des Reaktionsgemisches auf 280 °C gesteigert. Nach Erreichen des gewünschten Molekulargewichts wurde die Reaktionsmischung abkühlen gelassen und granuliert.

Das Polyethylenterephthalat enthaltend Fulleren und ein Vergleichsansatz bestehend aus Polyethylenterephthalat mit gleichem Molekulargewicht wurden jeweils gemahlen und 12 Stunden unter strömendem Stickstoff bei 140 °C getrocknet.

Zur Herstellung von Fäden wurden die Polymere in einem Extruder mit 13 mm Schneckendurchmesser bei 300 °C aufgeschmolzen, mit einem Durchsatz von 9,3 g/min durch eine 12-Loch-Düse mit 0,4 mm Lochdurchmesser und 0,6 mm Lochlänge bei einer Temperatur von 280 °C ausgepresst, mit einer Geschwindigkeit von 415 m/min abgezogen, mit einer üblichen Avivage versehen und aufgespult.

Die Spinnfäden hatten folgende Eigenschaften:

|  | Polymer mit Fulleren | Polymer ohne Fulleren |
|---|---|---|
| Titer (dtex) | 223 | 224 |
| Reißfestigkeit (cN/tex) | 9,2 | 8,7 |
| Reißdehnung (%) | 504 | 492 |

Beide Spinnfäden wurden in gleicher Weise auf einem Streckwerk mit drei beheizbaren Galettenpaaren unter folgenden Bedingungen kontinuierlich verstreckt und aufgespult:

|  | Geschwindigkeit (m/min) | Temperatur (°C) |
|---|---|---|
| 1. Galettenpaar | 30 | 90 |
| 2. Galettenpaar | 114 | 200 |
| 3. Galettenpaar | 110,6 | 25 |

Die verstreckten Spinnfäden hatten danach folgende Eigenschaften:

|  | Polymer mit Fulleren | Polymer ohne Fulleren |
|---|---|---|
| Titer (dtex) | 59 | 60 |
| Einzelfaser-Titer (dtex) | 5 | 5 |
| Reißfestigkeit (cN/tex) | 35 | 34 |
| Reißdehnung (%) | 35 | 28 |

**Patentansprüche**

1. Zusammensetzungen enthaltend Polyester und Fullerene erhältlich durch Polykondensation von einem oder mehreren polyesterbildenden Monomeren in an sich bekannter Weise, dadurch gekennzeichnet, daß das Fulleren mindestens einer der für die Herstellung des Polyesters eingesetzten Verbindungen zugesetzt wird.

2. Zusammensetzungen nach Anspruch 1, dadurch gekennzeichnet, daß die Polykondensation als Schmelzepolykondensation durchgeführt wird.

3. Zusammensetzungen nach Anspruch 1, dadurch gekennzeichnet, daß ein Diester der Formel II oder eine Mischung derartiger Diester zusammen mit einem Fulleren oder einem Gemisch von Fullerenen vorgelegt wird und mit einem zweiwertigen Alkohol der Formel III oder einem Gemisch derartiger Alkohole umgeestert wird und die Reaktionsmischung anschließend polykondensiert wird

$$R^3OOC\text{-}R^1\text{-}COOR^3 \qquad \text{(II)},$$

$$HO\text{-}R^2\text{-}OH \qquad\qquad\qquad (III),$$

worin

R$^1$   einen zweiwertigen ein- oder mehrkernigen aromatischen Rest darstellt und
R$^2$   einen zweiwertigen aliphatischen oder cycloaliphatischen Rest bedeutet, wobei die Reste R$^1$ und/oder R$^2$ in einem Molekül im Rahmen der gegebenen Definition unterschiedliche Bedeutungen annehmen können und
R$^3$   einen organischen Rest bedeutet, vorzugsweise Alkyl, insbesondere Methyl.

4.  Zusammensetzungen nach Anspruch 1, dadurch gekennzeichnet, daß eine Dicarbonsäure der Formel IV oder eine Mischung derartiger Dicarbonsäuren zusammen mit einem Fulleren oder einem Gemisch von Fullerenen vorgelegt und mit einem zweiwertigen Alkohol der Formel III oder einem Gemisch derartiger Alkohole in Gegenwart von Polykondensationskatalysatoren polykondensiert wird

$$HOOC\text{-}R^1\text{-}COOH \qquad\qquad\qquad (IV),$$

$$HO\text{-}R^2\text{-}OH \qquad\qquad\qquad (III);$$

worin

R$^1$   einen zweiwertigen ein- oder mehrkernigen aromatischen Rest darstellt und
R$^2$   einen zweiwertigen aliphatischen oder cycloaliphatischen Rest bedeutet, wobei die Reste R$^1$ und/oder R$^2$ in einem Molekül im Rahmen der gegebenen Definition unterschiedliche Bedeutungen annehmen können.

5.  Zusammensetzungen nach Anspruch 3 oder 4, dadurch gekennzeichnet, daß der Polyester eine wiederkehrende Struktureinheit der Formel I

$$[\text{-}OC\text{-}R^1\text{-}CO\text{-}O\text{-}R^2\text{-}O\text{-}] \qquad\qquad\qquad (I),$$

worin R$^1$ einen zweiwertigen ein- oder mehrkernigen aromatischen Rest darstellt und R$^2$ einen zweiwertigen aliphatischen oder cycloaliphatischen Rest bedeutet, wobei die Reste R$^1$ und/oder R$^2$ in einem Molekül im Rahmen der gegebenen Definition unterschiedliche Bedeutungen annehmen können, enthält.

6.  Zusammensetzungen nach Anspruch 5, dadurch gekennzeichnet, daß R$^1$ 2,6-Naphthylen bedeutet oder eine Kombination von 2,6-Naphthylen mit weiteren zweiwertigen ein- oder zweikernigen aromatischen Resten darstellt, insbesondere eine Kombination von 2,6-Naphthylen und 4,4'-Biphenylen, von 2,6-Naphthylen und 1,3-Phenylen oder von 2,6-Naphthylen und 1,4-Phenylen.

7.  Fasern mit einem Einzelfasertiter von weniger als 10 dtex, Filme und Hohlkörper enthaltend Zusammensetzungen gemäß einem der Ansprüche 1 bis 6.

8.  Fasern, Filme und Hohlkörper nach Anspruch 7, dadurch gekennzeichnet, daß die Fullerene aus C$_{60}$ bis C$_{70}$ Fraktionen bestehen.

9.  Fasern, Filme und Hohlkörper nach Anspruch 7, dadurch gekennzeichnet, daß diese 0,01 bis 1 Gew.% Fullerene enthalten.

10.  Fasern nach Anspruch 7, dadurch gekennzeichnet, daß diese Fadengewichte von 0,1 bis 10 dtex besitzen.

11.  Filme nach Anspruch 7, dadurch gekennzeichnet, daß diese Dicken von 2 bis 100 $\mu$m besitzen.

12.  Verwendung von Filmen oder Hohlkörpern nach einem der Ansprüche 7 bis 9 und 11 als Verpackungsmaterialien.

13. Verwendung von Filmen nach einem der Ansprüche 7 bis 9 und 11 als Segel oder als Folienfenster für Sportsegel.

14. Verwendung von Fasern nach einem der Ansprüche 7 bis 10 als Nähfäden, insbesondere als Nähfäden für chirurgische Zwecke.

**Claims**

1. A composition comprising polyesters and fullerenes, obtainable by polycondensation of one or more polyester-forming monomers in a manner known per se, which comprises adding the fullerene to at least one of the compounds employed for the preparation of the polyester.

2. A composition as claimed in claim 1, wherein the polycondensation is carried out as a melt polycondensation.

3. A composition as claimed in claim 1, wherein a diester of the formula II or a mixture of such diesters is initially introduced together with a fullerene or a mixture of fullerenes and is transesterified using a dihydric alcohol of the formula III or a mixture of such alcohols, and the reaction mixture is subsequently polycondensed

$$R^3OOC\text{-}R^1\text{-}COOR^3 \qquad\qquad (II),$$

$$HO\text{-}R^2\text{-}OH \qquad\qquad (III),$$

in which

$R^1$  is a divalent, monocyclic or polycyclic aromatic radical,
$R^2$  is a divalent aliphatic or cycloaliphatic radical, where the radicals $R^1$ and/or $R^2$ in a molecule can adopt different meanings within the bounds of the given definition, and
$R^3$  is an organic radical, preferably alkyl, in particular methyl.

4. A composition as claimed in claim 1, wherein a dicarboxylic acid of the formula IV or a mixture of such dicarboxylic acids is initially introduced together with a fullerene or a mixture of fullerenes, and is polycondensed with a dihydric alcohol of the formula III or a mixture of such alcohols in the presence of polycondensation catalysts

$$HOOC\text{-}R^1\text{-}COOH \qquad\qquad (IV),$$

$$HO\text{-}R^2\text{-}OH \qquad\qquad (III);$$

in which

$R^1$  is a divalent, monocyclic or polycyclic aromatic radical, and
$R^2$  is a divalent aliphatic or cycloaliphatic radical, where the radicals $R^1$ and/or $R^2$ in a molecule can adopt different meanings within the bounds of the given definition.

5. A composition as claimed in claim 3 or 4, wherein the polyester contains a recurring structural unit of the formula I

$$[\text{-}OC\text{-}R^1\text{-}CO\text{-}O\text{-}R^2\text{-}O\text{-}] \qquad\qquad (I),$$

in which $R^1$ is a divalent, monocyclic or polycyclic aromatic radical, and $R^2$ is a divalent aliphatic or cycloaliphatic radical, where the radicals $R^1$ and/or $R^2$ in a molecule can adopt different meanings within the bounds of the given definition.

6. A composition as claimed in claim 5, wherein $R^1$ is 2,6-naphthylene or a combination of 2,6-naphthylene with further divalent, monocyclic or bicyclic aromatic radicals, in particular a combination of 2,6-naphthylene and 4,4'-biphenylene, of 2,6-naphthylene and 1,3-phenylene or of 2,6-naphthylene and 1,4-phenylene.

7. A fiber having an individual fiber titer of less than 10 dtex, a film or a hollow article comprising a composition as claimed in one of claims 1 to 6.

8. A fiber, film or hollow article as claimed in claim 7, wherein the fullerenes consist of $C_{60}$ to $C_{70}$ fractions.

9. A fiber, film or hollow article as claimed in claim 7, containing from 0.01 to 1% by weight of fullerenes.

10. A fiber as claimed in claim 7, having a thread weight of from 0.1 to 10 dtex.

11. A film as claimed in claim 7, having a thickness of from 2 to 100 µm.

12. The use of a film or hollow article as claimed in one of claims 7 to 9 and 11 as packaging material.

13. The use of a film as claimed in one of claims 7 to 9 and 11 as sail or sheeting window for sports sails.

14. The use of a fiber as claimed in one of claims 7 to 10 as sewing thread, in particular as sewing thread for surgical purposes.


**Revendications**

1. Compositions contenant des polyesters et des fullerènes, pouvant être obtenues par polycondensation, d'une façon connue en soi, d'un ou plusieurs monomères formant des polyesters, caractérisées en ce que le fullerène est ajouté à au moins l'un des composés utilisés pour la préparation du polyester.

2. Compositions selon la revendication 1, caractérisées en ce que la polycondensation est effectuée en tant que polycondensation en masse fondue.

3. Compositions selon la revendication 1, caractérisées en ce que l'on dispose au préalable un diester de formule II ou un mélange de tels diesters, conjointement avec un fullerène ou un mélange de fullerènes et on le transestérifie avec un alcool dihydroxylé de formule III ou un mélange de tels alcools, et le mélange réactionnel est ensuite polycondensé,

$$R^3OOC-R^1-COOR^3 \qquad (II)$$

$$HO-R^2-OH \qquad (III)$$

formules dans lesquelles

$R^1$ représente un radical aromatique mono- ou polynucléaire divalent et
$R^2$ représente un radical aliphatique ou cycloaliphatique divalent, les radicaux $R^1$ et/ou $R^2$ pouvant adopter dans une molécule des significations différentes dans le cadre de la définition donnée, et
$R^3$ représente un radical organique, de préférence un radical alkyle, en particulier le groupe méthyle.

4. Compositions selon la revendication 1, caractérisées en ce que l'on dispose au préalable un acide dicarboxylique de formule IV ou un mélange de tels acides dicarboxyliques, conjointement avec un fullerène ou un mélange de fullerènes et on le polycondense avec un alcool dihydroxylé de formule III ou un mélange de tels alcools, en présence de catalyseurs de polycondensation,

$$HOOC-R^1-COOH \qquad (IV)$$

$$HO\text{-}R^2\text{-}OH \qquad\qquad (III)$$

formules dans lesquelles

R$^1$    représente un radical aromatique mono- ou polynucléaire divalent et

R$^2$    représente un radical aliphatique ou cycloaliphatique divalent, les radicaux R$^1$ et/ou R$^2$ pouvant adopter dans une molécule des significations différentes dans le cadre de la définition donnée.

5.  Compositions selon la revendication 3 ou 4, caractérisées en ce que le polyester contient un motif répétitif de formule I

$$[\text{-OC-R}^1\text{-CO-O-R}^2\text{-O-}] \qquad\qquad (I)$$

dans laquelle R$^1$ représente un radical aromatique mono- ou polynucléaire divalent et R$^2$ représente un radical aliphatique ou cycloaliphatique divalent, les radicaux R$^1$ et/ou R$^2$ pouvant adopter dans une molécule des significations différentes dans le cadre de la définition donnée.

6.  Compositions selon la revendication 5, caractérisées en ce que R$^1$ représente le groupe 2,6-naphtylène ou une association de 2,6-naphtylène avec d'autres radicaux aromatiques mono- ou binucléaires divalents, en particulier une association de 2,6-naphtylène et 4,4'-biphénylène, de 2,6-naphtylène et 1,3-phénylène ou de 2,6-naphtylène et 1,4-phénylène.

7.  Fibres ayant un titre de fibre unitaire de moins de 10 dtex, pellicules et corps creux, contenant des compositions selon l'une des revendications 1 à 6.

8.  Fibres, pellicules et corps creux selon la revendication 7, caractérisés en ce que les fullerènes consistent en fractions en C$_{60}$ à C$_{70}$.

9.  Fibres, pellicules et corps creux selon la revendication 7, caractérisés en ce qu'ils contiennent de 0,01 à 1 % en poids de fullerènes.

10. Fibres selon la revendication 7, caractérisées en ce qu'elles ont des poids de fil de 0,1 à 10 dtex.

11. Pellicules selon la revendication 7, caractérisées en ce qu'elles ont des épaisseurs de 2 à 100 µm.

12. Utilisation de pellicules ou de corps creux selon l'une des revendications 7 à 9 et 11, en tant que matériaux d'emballage.

13. Utilisation des pellicules selon l'une des revendications 7 à 9 et 11, en tant que voile ou en tant que fenêtre pelliculaire pour voile sportive.

14. Utilisation des fibres selon l'une des revendications 7 à 10, en tant que fils à coudre, en particulier en tant que fils à coudre à fins chirurgicales.